# EUROPEAN PATENT APPLICATION

(11) **EP 4 340 305 A2**
(43) Date of publication of application: **20.03.2024**
(21) Application number: 24155405.4
(22) Date of filing: 04.02.2015
(51) Int. Cl.: H04L 25/03

(54) **SYSTEMS AND METHODS FOR MAPPING VIRTUAL RADIO INSTANCES INTO PHYSICAL VOLUMES OF COHERENCE IN DISTRIBUTED ANTENNA SYSTEMS**

(30) Priority: 07.02.2014 US 201461937273 P; 02.02.2015 US 201514611565
(62) Divisional of application: 15746217.7
(71) Applicant: Rearden, LLC, Mountain View, CA 94041 (US)
(72) Inventor: Perlman, Stephen G., San Francisco, 94107 (US); Forenza, Antonio, San Francisco, 94107 (US); Van Der Laan, Roger, San Francisco, 94107 (US); Dio, Mario Di, San Francisco, 94107 (US); Saibi, Fadi, San Francisco, 94107 (US); Pitman, Timothy A., San Francisco, 94107 (US)
(74) Representative: WP Thompson

(57) **Abstract**

Systems and methods are described for mapping Virtual Radio Instances (VRIs) into physical volumes of coherence in a Multiple Antenna System (MAS) with Multi-User (MU) transmissions ("MU-MAS"). These mapping methods enable communications through simultaneous non-interfering data streams in the same frequency band between the MU-MAS and multiple users, within their own volume of coherence. As the users move, their VRIs follow their respective volumes of coherence via teleportation to adjacent MU-MAS networks, thereby eliminating the need for handoffs as in conventional cellular systems and unnecessary control data overhead.

## Description

### RELATED APPLICATIONS

This application claims the benefit of and priority to co-pending U.S. Provisional Patent Application No. 61/937,273, filed, February 7, 2014, entitled, "Systems And Methods For Mapping Virtual Radio Instances Into Physical Areas Of Coherence In Distributed Antenna Wireless Systems".

This application is a continuation-in-part of the following four co-pending U.S. Patent Applications:
U.S. Application Serial No. 13/844,355, entitled "Systems and Methods for Radio Frequency Calibration Exploiting Channel Reciprocity in Distributed Input Distributed Output Wireless Communications"
U.S. Application Serial No. 13/797,984, entitled "Systems and Methods for Exploiting Inter-cell Multiplexing Gain in Wireless Cellular Systems Via Distributed Input Distributed Output Technology"
U.S. Application Serial No. 13/797,971, entitled "Systems and Methods for Exploiting Inter-cell Multiplexing Gain in Wireless Cellular Systems Via Distributed Input Distributed Output Technology"
U.S. Application Serial No. 13/797,950, entitled "Systems and Methods for Exploiting Inter-cell Multiplexing Gain in Wireless Cellular Systems Via Distributed Input Distributed Output Technology"
This application may be related to the followingU.S. Patents and co-pending U.S. Patent Applications:
U.S. Application Serial No. 14/156,254, entitled "System and Method For Distributed Antenna Wireless Communications"
U.S. Application Serial No. 14/086,700, entitled "Systems and Methods for Exploiting Inter-cell Multiplexing Gain in Wireless Cellular Systems Via Distributed Input Distributed Output Technology"
U.S. Application Serial No. 14/023,302, entitled "Systems And Methods To Coordinate Transmissions In Distributed Wireless Systems Via User Clustering"
U.S. Application Serial No. 13/633,702, entitled "Systems and Methods for Wireless Backhaul in Distributed-Input Distributed-Output Wireless Systems"
U.S. Application Serial No. 13/475,598, entitled "Systems and Methods to enhance spatial diversity in distributed-input distributed-output wireless systems"
U.S. Application Serial No. 13/464,648, entitled "System and Methods to Compensate for Doppler Effects in Distributed-Input Distributed Output Systems"
U.S. Application Serial No. 13/461,682, entitled "System and Method for Adjusting DIDO Interference Cancellation Based On Signal Strength Measurements"
U.S. Application Serial No. 13/233,006, entitled "System and Methods for planned evolution and obsolescence of multiuser spectrum"
U.S. Application Serial No. 13/232,996, entitled "Systems and Methods to Exploit Areas of Coherence in Wireless Systems"
U.S. Application Serial No. 12/802,989, entitled "System And Method For Managing Handoff Of AClient Between Different Distributed-Input-Distributed-Output (DIDO) Networks Based On Detected Velocity Of The Client"
U.S. Application Serial No. 12/802,988, entitled "Interference Management, Handoff, Power Control And Link Adaptation In Distributed-Input Distributed-Output (DIDO) Communication Systems"
U.S. Application Serial No. 12/802,975, entitled "System And Method For Link adaptation In DIDO Multicarrier Systems"
U.S. Application Serial No. 12/802,974, entitled "System And Method For Managing Inter-Cluster Handoff Of Clients Which Traverse Multiple DIDO Clusters"
U.S. Application Serial No. 12/802,958, entitled "System And Method For Power Control And Antenna Grouping In ADistributed-Input-Distributed-Output (DIDO) Network"
U.S. Patent No. 8,654,815, issued February 18, 2014, entitled "System and Method for Distributed Input Distributed Output Wireless Communications"
U.S. Patent No. 8,571,086, issued October 29, 2013, entitled "System and Method for DIDO Precoding Interpolation in Multicarrier Systems"
U.S. Patent No. 8,542,763, issued September 24, 2013, entitled "Systems and Methods To Coordinate Transmissions In Distributed Wireless Systems Via User Clustering"
U.S. Patent No. 8,469,122, issued June 25, 2013, entitled "System and Method for Powering Vehicle Using Radio Frequency Signals and Feedback"
U.S. Patent No. 8,428,162, issued April 23, 2013, entitled "System and Method for Distributed Input Distributed Output Wireless Communications"
U.S. Patent No. 8,307,922, issued November 13, 2012, entitled "System and Method for Powering an Aircraft Using Radio Frequency Signals and Feedback";
U.S. Patent No. 8,170,081, issued May 1, 2012, entitled "System And Method For Adjusting DIDO Interference Cancellation Based On Signal Strength Measurements"
U.S. Patent No. 8,160,121, issued Apr. 17, 2012, entitled, "System and Method For Distributed Input-Distributed Output Wireless Communications";
U.S. Patent No. 7,885,354, issued Feb. 8, 2011, entitled "System and Method For Enhancing Near Vertical Incidence Skywave ("NVIS") Communication Using Space-Time Coding."
U.S. Patent No. 7,711,030, issued May 4, 2010, entitled "System and Method For Spatial-Multiplexed Tropospheric Scatter Communications";
U.S. Patent No. 7,636,381, issued Dec. 22, 2009, entitled "System and Method for Distributed Input Distributed Output Wireless Communication";
U.S. Patent No. 7,633,994, issued Dec. 15, 2009, entitled "System and Method for Distributed Input Distributed Output Wireless Communication";
U.S. Patent No. 7,599,420, issued Oct. 6, 2009, entitled "System and Method for Distributed Input Distributed Output Wireless Communication";
U.S. Patent No. 7,451,839, issued November 18, 2008, entitled "System and Method for Powering a Vehicle Using Radio Frequency Generators";
U.S. Patent No. 7,418,053, issued Aug. 26, 2008, entitled "System and Method for Distributed Input Distributed Output Wireless Communication";

### BACKGROUND

In cellular systems, user mobility across adjacent cells is typically handled via handoff. During handoff, the information of the user is passed from the base station of the current cell to the base station of the adjacent cell. This procedure results in significant overhead over wireless links and backhaul (due to control information), latency, and potential call drops (e.g., when the cell handling handoff is overloaded).These problems are particularly exacerbated in wireless systems employing small-cells as in long term evolution (LTE) networks. In fact, the coverage area of small-cells is only a fraction of conventional macro-cell deployments, thereby increasing the probability of users moving across cells and the chances to trigger handoff procedures.

Another limit of prior art cellular systems is the rigid design of the base station architectures, which are not amenable for parallelization, particularly as the number of subscribers joining the network increases. For example, every LTE eNodeB can support onlya limited number of concurrent subscribers ranging from about 20 users for pico-cells, 60-100 users for small-cells, and up to 100-200 users for macrocells. These concurrent subscribers are typically served through complex scheduling techniques or via multiple access techniques such as orthogonal frequency division multiple access(OFDMA) or time division multiple access (TDMA).

Given the growing demand for throughput over wireless networks,in some cases at the rate of over 2x per year, and the ever increasing number of wireless subscribers using smart phones, tablets and data-hungry applications, it is desirable to design systems that can provide multiple fold increases in capacity and with scalable architectures that can support large numbers of subscribers. One promising solution is distributed-input distributed-output (DIDO) technology disclosed in the related patents and applications listed above. The present embodiments of the invention include a novel system architecture for DIDO systems that allows for scalability and efficient use of the spectrum, even in the presence of user mobility.

One embodiment of the present invention includes a virtual radio instance (VRI) comprising a protocol stack that maps data streams coming from a network into physical layer I/Q samples fed to the DIDO precoder. In one embodiment each VRI is bound to one user device and the volume of coherence, as described herein, created by the DIDO precoder around that user device. As such, the VRI follows the user device as it moves around the coverage area, thereby keeping its context active and eliminating the need for handoff.

For example, "VRI teleportation" is described belowas the process by which the VRI is ported from one physical radio access network (RAN) to another while maintaining the context in an activestate and without disrupting the connection. Unlike handoff in conventional cellular systems, VRI teleportation seamlessly hands one VRI from one RAN to the adjacent one, without incurring any additional overhead. Moreover, because of the flexible design of VRIs and given that in one embodiment they are bound to only one user device, the architecture disclosed in the present application is very parallelizable and ideal for systems that scale up to a large number of concurrent subscribers.

### BRIEF DESCRIPTION OF THE DRAWINGS

A better understanding of the present invention can be obtained from the following detailed description in conjunction with the drawings, in which:
**FIG. 1** illustratesthe general framework of the Radio Access Network (RAN)
**FIG. 2** illustratesthe protocol stack of the Virtual Radio Instance (VRI) consistent to the OSI model and LTE standard
**FIG. 3** illustratesadjacent RANs to extend coverage in DIDO wireless networks
**FIG. 4** illustrateshandoff between RAN and adjacent wireless networks
**FIG. 5** illustrateshandoff between RAN and LTE cellular networks

### DETAILED DESCRIPTION

One solution to overcome many of the above prior art limitations is an embodiment of Distributed-Input Distributed-Output (DIDO) technology. DIDO technology is described in the following patents and patent applications, all of which are assigned the assignee of the present patent and are incorporated by reference. These patents and applications are sometimes referred to collectively herein as the "Related Patents and Applications."
U.S. Application Serial No. 14/156,254, entitled "System and Method For Distributed Antenna Wireless Communications"
U.S. Application Serial No. 14/086,700, entitled "Systems and Methods for Exploiting Inter-cell Multiplexing Gain in Wireless Cellular Systems Via Distributed Input Distributed Output Technology"
U.S. Application Serial No. 14/023,302, entitled "Systems And Methods To Coordinate Transmissions In Distributed Wireless Systems Via User Clustering"
U.S. Application Serial No. 13/844,355, entitled "Systems and Methods for Radio Frequency Calibration Exploiting Channel Reciprocity in Distributed Input Distributed Output Wireless Communications"
U.S. Application Serial No. 13/797,984, entitled "Systems and Methods for Exploiting Inter-cell Multiplexing Gain in Wireless Cellular Systems Via Distributed Input Distributed Output Technology"
U.S. Application Serial No. 13/797,971, entitled "Systems and Methods for Exploiting Inter-cell Multiplexing Gain in Wireless Cellular Systems Via Distributed Input Distributed Output Technology"
U.S. Application Serial No. 13/797,950, entitled "Systems and Methods for Exploiting Inter-cell Multiplexing Gain in Wireless Cellular Systems Via Distributed Input Distributed Output Technology"
U.S. Application Serial No. 13/633,702, entitled "Systems and Methods for wireless backhaul in distributed-input distributed-output wireless systems"
U.S. Application Serial No. 13/475,598, entitled "Systems and Methods to enhance spatial diversity in distributed-input distributed-output wireless systems"
U.S. Application Serial No. 13/464,648, entitled "System and Methods to Compensate for Doppler Effects in Distributed-Input Distributed Output Systems"
U.S. Application Serial No. 13/233,006, entitled "System and Methods for planned evolution and obsolescence of multiuser spectrum"
U.S. Application Serial No. 13/232,996, entitled "Systems and Methods to Exploit Areas of Coherence in Wireless Systems"
U.S. Application Serial No. 12/802,989, entitled "System And Method For Managing Handoff Of AClient Between Different Distributed-Input-Distributed-Output (DIDO) Networks Based On Detected Velocity Of The Client"
U.S. Application Serial No. 12/802,988, entitled "Interference Management, Handoff, Power Control And Link Adaptation In Distributed-Input Distributed-Output (DIDO) Communication Systems"
U.S. Application Serial No. 12/802,975, entitled "System And Method For Link adaptation In DIDO Multicarrier Systems"
U.S. Application Serial No. 12/802,974, entitled "System And Method For Managing Inter-Cluster Handoff Of Clients Which Traverse Multiple DIDO Clusters"
U.S. Application Serial No. 12/802,958, entitled "System And Method For Power Control And Antenna Grouping In ADistributed-Input-Distributed-Output (DIDO) Network"
U.S. Patent No. 8,654,815, issued February 18, 2014, entitled "System and Method for Distributed Input Distributed Output Wireless Communications"
U.S. Patent No. 8,571,086, issued October 29, 2013, entitled "System and Method for DIDO precoding interpolation in multicarrier systems"
U.S. Patent No. 8,542,763, issued September 24, 2013, entitled "Systems and Methods to coordinate transmissions in distributed wireless systems via user clustering"
U.S. Patent No. 8,469,122, issued June 25, 2013, entitled "System and Method for Powering Vehicle Using Radio Frequency Signals and Feedback"
U.S. Patent No. 8,428,162, issued April 23, 2013, entitled "System and Method for Distributed Input Distributed Output Wireless Communication"
U.S. Patent No. 8,307,922, issued November 13, 2012, entitled "System and Method for Powering an Aircraft Using Radio Frequency Signals and Feedback";
U.S. Patent No. 8,170,081, issued May 1, 2012, entitled "System And Method For Adjusting DIDO Interference Cancellation Based On Signal Strength Measurements"
U.S. Patent No. 8,160,121, issued Apr. 17, 2012, entitled, "System and Method For Distributed Input-Distributed Output Wireless Communications";
U.S. Patent No. 7,885,354, issued Feb. 8, 2011, entitled "System and Method For Enhancing Near Vertical Incidence Skywave ("NVIS") Communication Using Space-Time Coding."
U.S. Patent No. 7,711,030, issued May 4, 2010, entitled "System and Method For Spatial-Multiplexed Tropospheric Scatter Communications";
U.S. Patent No. 7,636,381, issued Dec. 22, 2009, entitled "System and Method for Distributed Input Distributed Output Wireless Communication";
U.S. Patent No. 7,633,994, issued Dec. 15, 2009, entitled "System and Method for Distributed Input Distributed Output Wireless Communication";
U.S. Patent No. 7,599,420, issued Oct. 6, 2009, entitled "System and Method for Distributed Input Distributed Output Wireless Communication";
U.S. Patent No. 7,451,839, issued November 18, 2008, entitled "System and Method for Powering a Vehicle Using Radio Frequency Generators";
U.S. Patent No. 7,418,053, issued Aug. 26, 2008, entitled "System and Method for Distributed Input Distributed Output Wireless Communication";

### 1. Systems and Methods for Mapping VRIs into Volumes of Coherence

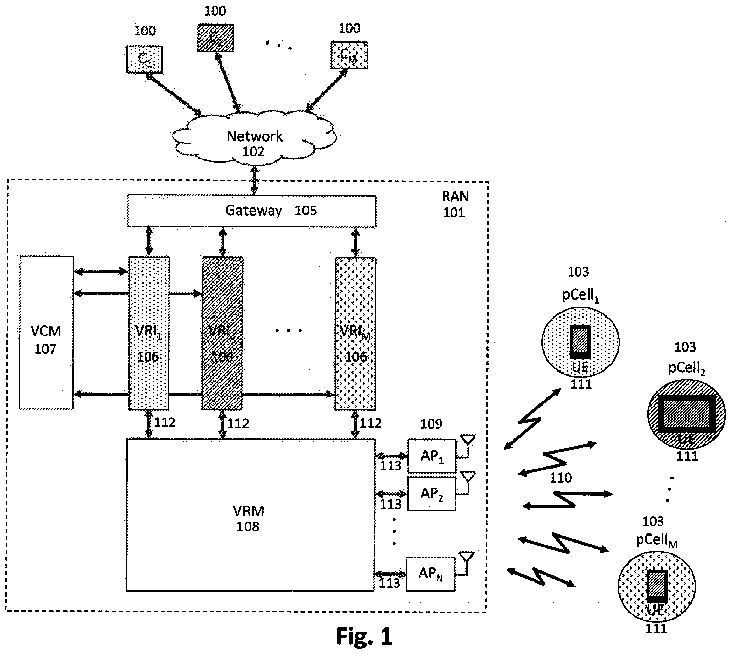

The present application discloses systems and methods to deliver multiple simultaneous non-interfering data streams within the same frequency band between a network and a plurality of volumes of coherence in a wireless link through Virtual Radio Instances (VRIs). In one embodiment, the system is a multiuser multiple antenna system (MU-MAS)as depicted in **Figure 1****.** The color-coded units in **Figure 1** show one-to-one mapping between the data sources 100, the VRIs 106 and the volumes of coherence 103 asdescribed hereafter.

### 1.1 Overview of the System Architecture

In **Figure 1****,** the *data sources100are* data files or streams carrying web content or files in a local or remote server, such as text, images, sounds, videos or combinations of those. One or multiple data files or streamsare sent or received betweenthe *network* 102 and every *volume of coherence* 103in the wireless link 110. In one embodiment the network is the Internet or any wireline or wireless local area network.

The volumeof coherence is a volume in space where thewaveforms in the same frequency band from differentantennas of the MU-MAS add up coherently in a way that only the data output 112 of one VRlis received within that volumeof coherence, without any interference from other data outputs from other VRlssent simultaneously over the same wireless link.ln the present application, we use the term "volumeof coherence" to describe "personal cells" (e.g., "*pCells^{™}*" 103), previously disclosed using the phrase "areas of coherence" in previous patent applications, such as U.S. Application Serial No. 13/232,996, entitled "Systems and Methods to Exploit Areas of Coherence in Wireless Systems." In one embodiment, the volumes of coherence correspond to the locations of the user equipment (UE) 111 or subscribers of the wireless network, such that every subscriber is associated to one or multiple data sources 100. Thevolumes of coherence may vary in size and shape depending on propagation conditions as well asthe type of MU-MAS precoding techniques employed to generate them. In one embodiment of the invention, the MU-MAS precoder dynamically adjustssize, shape and location of the volumes of coherence, thereby adapting to the changing propagation conditions to deliver content to the users with consistentquality of service.

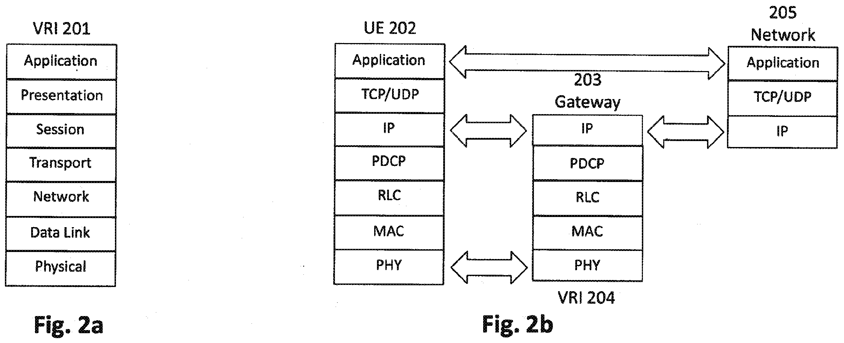

The data sources 100 are first sent through the Network 102 to the Radio Access Network (*RAN*) 101. Then, the RAN translates the data files or streams into a data format that can be received by the UEs 103 and sendsthedata files or streams simultaneously to the plurality of volumes of coherence, such that every UE receives its own data files or streams without interference from other data files or streams sent to other UEs.ln one embodiment, the RAN 1101 consists of a *gateway* 105 as the interface between the network and the VRIs 106. The VRIs translates packets being routed by the gateway into data streams 112, either as raw data, or in a packet or frame structure that are fed to a MU-MAS baseband unit. In one embodiment, the VRI comprises the open systems interconnection (OSI) protocol stack consisting of sever layers: application, presentation, session, transport, network, data link and physical, as depicted in **Figure 2a****.**In another embodiment, the VRI only comprises a subset of the OSI layers.

In another embodiment, the VRls 106 are defined from different wireless standards. By way of example, but not limitation, a first VRI consists of the protocol stack from the GSM standard, a second VRI from the 3G standard, a third VRI from HSPA+ standard, a fourth VRI from the LTE standard, a fifth VRI from the LTE-A standard and a sixth VRI from the Wi-Fi standard. In an exemplary embodiment, the VRlscomprise the control-plane or user-plane protocol stack defined by the LTE standards. The user-plane protocol stack is shown in **Figure 2b****.** Every UE 202 communicates with its own VRI 204 through the PHY, MAC, RLC and PDCP layers, with the gateway 203 through the IP layer and with the network 205 through the application layer, and despite the fact that, using prior art techniques, different wireless standards are spectrum-incompatible and could not concurrently share the same spectrum, by implementing different wireless standards in different VRIs in this embodiment, all of the wireless standards concurrently share the same spectrum and further, each link to a user device can utilize the full bandwidth of the spectrum concurrently with the other user devices, regardless of which wireless standards are used for each user device. Different wireless standard have different characteristics. For example, Wi-Fi is very low latency, GSM requires only one user device antenna, whereas LTE requires a minimum of two user device antennas. LTE-Advanced supports high-order 256-QAM modulation. Bluetooth Low Energy is inexpensive and very low power. New, yet unspecified standards may have other characteristics, including low latency, low power, low cost, high-order modulation.For the control-plane protocol stack, the UE also communicates directly with the mobility management entity (MME) through the NAS(as defined in the LTE standard stack) layer.

The Virtual Connection Manager (VCM) 107 is responsible for assigning the PHY layer identity of the UEs (e.g., cell-specific radio network temporary identifier, C-RNTI) as well as instantiating,authenticating and managing mobility of the VRIsand mappingone or more C-RNTlsto VRls for the UEs.The data streams 112at the output of the VRIs are fed to the Virtual Radio Manager (VRM) 108. The VRM comprises a scheduler unit (that schedules DL (downlink) and UL (uplink) packets for different UEs), a baseband unit (e.g., comprising of FEC encoder/decoder, modulator/demodulator, resource grid builder) and a MU-MAS baseband processor (comprising ofmatrix transformation, including DL precoding or UL post-coding methods). In one embodiment, the data streams 112 are I/Q samples at the output of the PHY layer in **Figure 2b** that are processed by the MU-MAS baseband processor. The data streams 112 of I/Q samples may be a purely digital waveform (e.g. LTE, GSM), a purelyanalog waveform (e.g. FM radio with no digital modulation, a beacon, or a wireless power waveform), or a mixed analog/digital waveform (e.g. FM radio embedded with Radio Data System data, AMPS) at the output of the PHY layer that are processed by the MU-MAS baseband processor. In a different embodiment, the data streams 112 are MAC, RLC or PDCP packets sent to a scheduler unit that forwards them to a baseband unit.The baseband unit converts packets into I/Q fed to the MU-MAS baseband processor. Thus, either as I/Q samples themselves, or converted from packets to I/Q samples, the data streams 112 result in a plurality of digital waveforms that are processed by the MU-MAS baseband processor.

The MU-MAS baseband processor is the core of the VRM 108 in **Figure 1**that converts the M I/Q samples from the M VRIs into N data streams 113 sent to N access points (APs) 109. In one embodiment, the data streams 113 are I/Q samples of the N waveforms transmitted over the wireless link 110 from the APs 109. In this embodiment the AP consists of ADC/DAC, RF chain and antenna. In a different embodiment, the data streams 113 are bits of information and MU-MAS precoding information that are combined at the APs to generate the N waveforms sent over the wireless link 110. In this embodiment, every AP is equipped with a CPU, DSP or SoC to carry out additional baseband processing before the ADC/DAC units. In one embodiment the data streams 113 are bits of information and MU-MAS precoding information that are combined at the APs to generate the N waveforms sent over the wireless link 110 that have a lower data rate than data streams 113 that are I/Q samples of the N waveforms. In one embodiment lossless compression is used to reduce the data rate of data streams 113. In another embodiment lossy compression is used to reduce the data rate of data streams.

### 1.2Supporting Mobility and Handoff

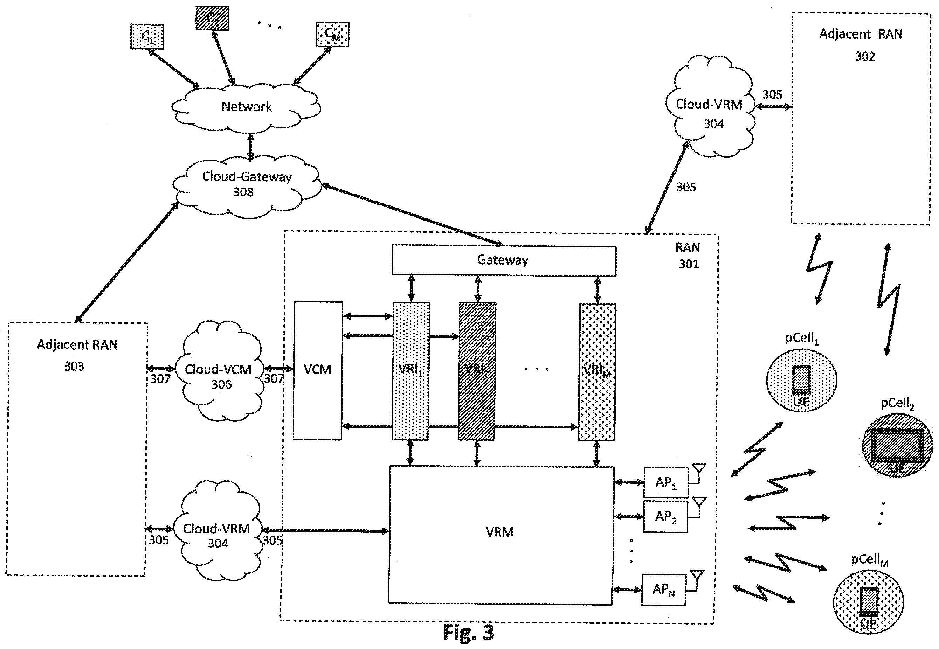

The systems and methods described thus far work as long the UEs are within reach of the APs. When the UEs travel away from the AP coverage area the link may drop and the RAN 301 is unable to create volumes of coherence. To extend the coverage area, the systems can gradually evolve by adding new APs. There may not be enough processing power in the VRM, however, to support the new APs or there may be practical installation issues to connect the new APs to the same VRM. In these scenarios, it is necessary to add adjacent RANs 302 and 303 to support the new APs as depicted in **Figure 3****.**

In one embodiment a given UE is located in the coverage area served by both the first RAN 301 and the adjacent RAN 302. In this embodiment, the adjacent RAN 302 only carries out MU-MAS baseband processing for that UE, jointly with the MU-MAS processing from the first RAN 301.No VRI is handled by the adjacent RAN 302 for the given UE, since the VRI for that UE is already running within the first RAN 301. To enable joint precoding between the first and adjacent RANs, baseband information is exchanged between the VRM in the first RAN 301 and the VRM in the adjacent RAN 302 through the cloud-VRM 304 and the links 305. The links 305 are any wireline (e.g., fiber, DSL, cable) or wireless link (e.g., line-of-sight links) that can support adequate connection quality (e.g. low enough latency and adequate data rate) to avoid degrading performance of the MU-MAS precoding.

In a different embodimenta given UE moves out of the coverage area of the first RAN 301 into the coverage area of the adjacent RAN 303. In this embodiment the VRI associated to that UE is "teleported" from the first RAN 301 to the adjacent RAN 303. What is meant by the VRI being teleported or "VRI teleportation" is the VRI state information is transferred from RAN 301 to RAN 303, and the VRI ceases to execute within RAN 301 and begins to execute within RAN 303. Ideally, the VRI teleportation occurs fast enough that, from the perspective of the UE served by the teleported VRI, it does not experience any discontinuity in its data stream from the VRI. In one embodiment, if there is a delay before the VRI is fully executing after being teleported, then before the VRI teleportation begins, the UE served by that VRI is put into a state where it will not drop its connection or otherwise enter an undesirable state until the VRI starts up at the adjacent RAN 303, and the UE once again is served by an executing VRI."VRI teleportation"is enabled by the cloud-VCM 306 that connects the VCM in the first RAN 301 to the VCM in the adjacent RAN 303. The wireline or wireless links 307 between VCM do not have the same restrictive performanceconstraints as the links 305 between VRMs, since the links 307 only carry data and do not have any effect on performance of the MU-MAS precoding. In the same embodiment of the invention, additional links 305 are employed between the first RAN 301 and the adjacent RAN 303 to connect their VRMsthat can support adequate connection quality (e.g. low enough latency and adequate data rate) to avoid degrading performance of the MU-MAS precoding. In one embodiment of the invention, the gateways of the first and adjacent RANs are connected to the cloud-gateway 308 that manages all network address (or IP address) translationacross RANs.

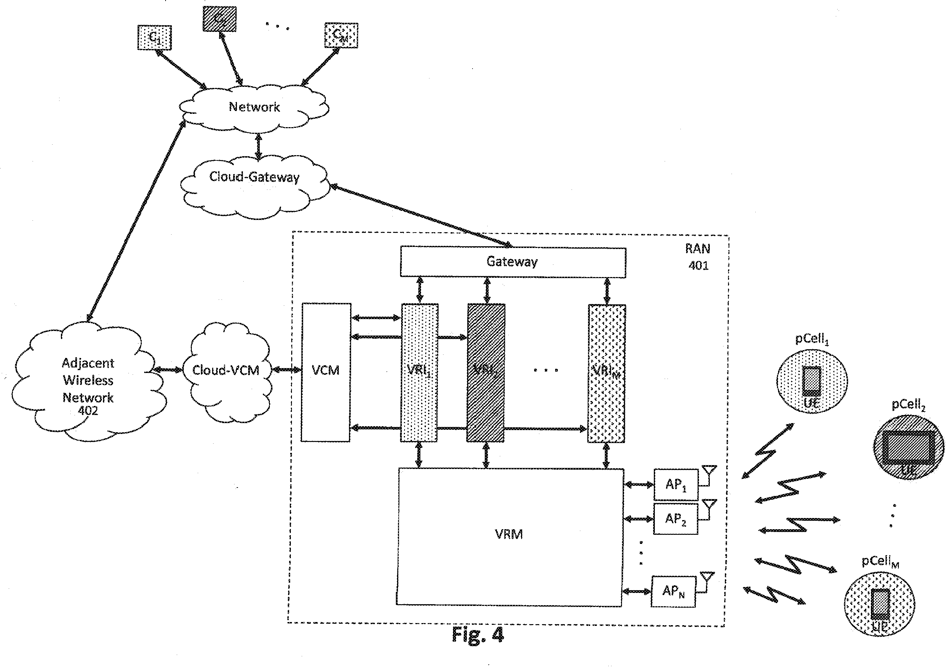

In one embodiment of the invention, VRI teleportation occurs between the RAN 401 disclosed in the present application and any adjacent wireless network 402 as depicted in **Figure 4****.** By way of example, but not limitation, the wireless network 402 is any conventional cellular (e.g., GSM, 3G, HSPA+, LTE, LTE-Advanced, CDMA, WiMAX, AMPS) or wireless local area network (WLAN, e.g., Wi-Fi).By way of example, but not limitation, the wireless protocol can also be broadcast digital or analog protocols, such as ATSC, DVB-T, NTSC, PAL, SECAM, AM or FM radio, with or without stereo or RDS, or broadcast carrier waveforms for any purpose, such as for timing referenceor beacons. Or the wireless protocol can create waveforms for wireless power transmission, for example, to be received by a rectifying antenna, such as those describedin U.S. patents 7,451,839, 8,469,122, and 8,307,922. As the VRI is teleported from the RAN401 to the adjacent wireless network 402 the UE is handed off between the two networks and its wireless connection may continue.

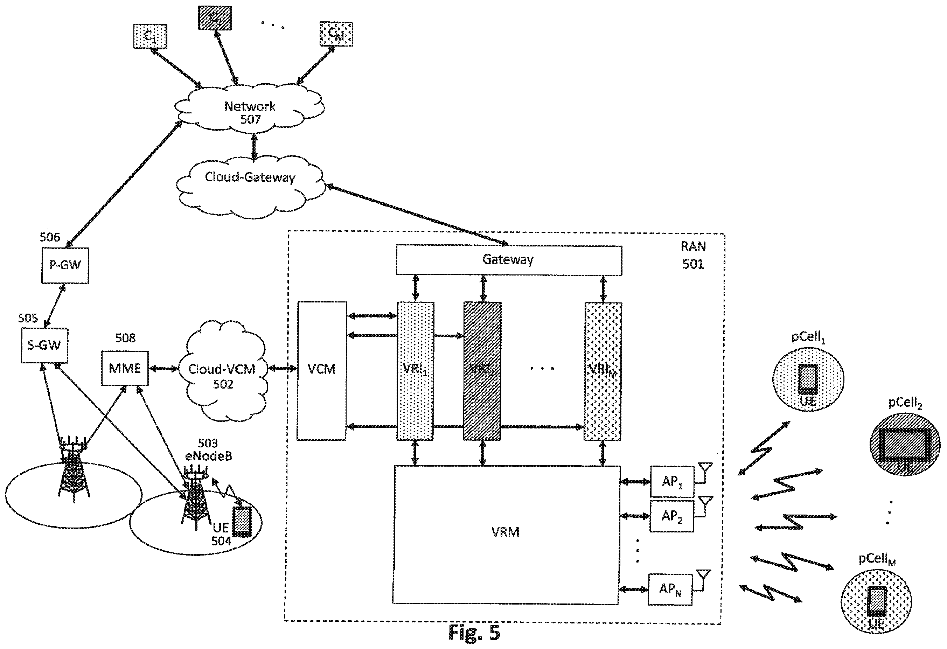

In one embodiment, the adjacent wireless network 402 is the LTE network shown in **Figure 5****.** In this embodiment, the Cloud-VCM 502 is connected to the LTE mobility management entity (MME)508. All the information about identity, authentication and mobility of every UE handing-off between the LTE and the RAN 501 networks is exchanged between the MME508 and the cloud-VCM 502. In the same embodiment, the MME is connected to one or multiple eNodeBs 503 connecting to the UE 504 through the wireless cellular network. The eNodeBs are connected to the network 507 through the serving gateway (S-GW) 505 and the packet data network gateway (P-GW) 506.

### 2. Systems and Methods for DL and UL MU-MAS processing

Typical downlink (DL) wireless links consist of broadcast physical channels carrying information for the entire cell and dedicated physical channels with information and data for given UE. For example, the LTE standard defines broadcast channels such as P-SS and S-SS (used for synchronization at the UE), MIB and PDCCH as well as channels for carrying data to given UE such as the PDSCH. In one embodiment of the present invention, all the LTE broadcast channels (e.g., P-SS, S-SS, MIC, PDCCH) are precoded such that every UE receives its own dedicated information. In a different embodiment, part of the broadcast channel is precoded and part is not. By way of example, but not limitation, the PDCCH contains broadcast information as well as information dedicated to one UE, such as the DCI 1A and DCI 0 used to point the UEs to the resource blocks (RBs) to be used over DL and uplink (UL) channels. In one embodiment, the broadcast part of the PDCCH is not precoded, whereas the portion containing the DCI 1A and 0 is precoded in such a way that every UE obtains its own dedicated information about the RBs that carry data.

In another embodiment of the invention precoding is applied to all or only part of the data channels, such as the PDSCH in LTE systems. By applying precoding over the entire data channel, the MU-MAS disclosed in the present invention allocates the entire bandwidth to every UE and the plurality of data streams of the plurality of UEs are separated via spatial processing. In typical scenarios, however, most, if not all, of the UEs do not need the entire bandwidth (e.g., ~55 Mbps per UE, peak DL data rate for TDD configuration #2 and S-subframe configuration #7, in 20MHz of spectrum). Then, the MU-MAS in the present invention subdivides the DL RBs in multiple blocks as in frequency division multiple access (FDMA) ororthogonal frequency division multiple access (OFDMA) systems and assigns each FDMA or OFMDA block to a subset of UEs. All the UEs within the same FDMA or OFDMA block are separated into different volumes of coherencethrough the MU-MAS precoding. In another embodiment, the MU-MAS allocates different DL subframes to different subsets of UEs, thereby dividing up the DL as in TDMA systems. In yet another embodiment, the MU-MAS both subdivides the DL RBs in multiple blocks as in OFDMA systems among subsets of UEs and also allocates different DL subframes to different subsets of UEs as in TDMA systems, thus utilizing both OFDMA and TDMA to divide up the throughput. For example, if there are 10 APs in a TDD configuration #2 in 20 MHz, then there is an aggregate DL capacity of 55 Mbps * 10 = 550 Mbps. If there are 10 UEs, then each UE could receive 55 Mbps concurrently. If there are 200 UEs, and the aggregate throughput is to be divided up equally, then using OFDMA, TDMA or a combination thereof, the 200 UEs would be divided into 20 groups of 10 UEs, whereby each UE would receive 550 Mbps /200 = 2.75 Mbps. As another example, if 10 UEs required 20 Mbps, and the other UEs were to evenly share the remaining throughput, then 20Mbps*10=200Mbps of the 550 Mbps would be used for 10 UEs, leaving 550 Mbps - 200Mbps= 350 Mbps to divide among the remaining 200-10=190 UEs. As such, each of the remaining 90 UEs would receive 350 Mbps /190=1.84Mbps. Thus, far more UEs than APs can be supported in the MU-MAS system of the present application, and the aggregate throughput of all the APs can be divided among the many UEs.

In the UL channel, the LTE standard defines conventional multiple access techniques such as TDMA or SC-FDMA. In the present invention, the MU-MAS precoding is enabled over the DL in a way to assign UL grants to different UEs to enable TDMA and SC-FDMA multiple access techniques.As such, the aggregate UL throughput can be divided among far more UEs than there are APs.

When there are more UEs than there are APs and the aggregate throughput is divided among the UEs, as described above, in one embodiment, the MU-MAS system supports one VRI for each UE, and the VRM controls the VRIs such that VRIs utilize RBs and resource grants in keeping with the chosen OFDMA, TDMA or SC-FDMA system(s) used to subdivide the aggregate throughput. In another embodiment, one or more individual VRIs may support multiple UEs and manage the scheduling of throughput among these UEs via OFDMA, TDMA or SC-FDMA techniques.

In another embodiment, the scheduling of throughput is based on load balancing of user demand, using any of many prior art techniques, depending upon the policies and performance goals of the system. In another embodiment, scheduling is based upon Quality of Service (QoS) requirements for particular UEs (e.g. UEs used by subscribersthat pay for a particular tier of service, guaranteeing certain throughput levels) or for particular types of data (e.g. video for a television service).

In a different embodiment, uplink (UL) receive antenna selection is applied to improve link quality. In this method, the UL channel quality is estimated at the VRM based on signaling information sent by the UEs (e.g., SRS, DMRS) and the VRM decides the best receive antennas for different UEs over the UL. Then the VRM assigns one receive antenna to every UE to improve its link quality. In a different embodiment, receive antenna selection is employed to reduce cross-interference between frequency bands due to the SC-FDMA scheme. One significant advantage of this method is that the UE would transmit over the UL only to the AP closest to its location. In this scenario, the UE can significantly reduce its transmit power to reach the closest AP, thereby improving battery life. In the same embodiment, different power scaling factors are utilized for the UL data channel and for the UL signaling channel. In one exemplary embodiment, the power of the UL signaling channel (e.g., SRS) is increased compared to the data channel to allow UL CSI estimation and MU-MAS precoding (exploiting UL/DL channel reciprocity in TDD systems) from many APs, while still limiting the power required for UL data transmission. In the same embodiment, the power levels of the UL signaling and UL data channels are adjusted by the VRM through DL signaling based on transmit power control methods that equalize the relative power to/from different UEs.

In a different embodiment, maximum ratio combining (MRC) is applied at the UL receiver to improve signal quality from every UE to the plurality of APs. In a different embodiment, zero-forcing (ZF) or minimum mean squared error (MMSE) or successive interference cancellation (SIC) or other non-linear techniques or the same precoding technique as for the DL precoding are applied to the UL to differentiate data streams being received simultaneously and within the same frequency band from different UEs' volumes of coherence. In the same embodiment, receive spatial processing is applied to the UL data channel (e.g., PUSCH) or UL control channel (e.g., PUCCH) or both.

### 3. Additional embodiments

In one embodiment, the volume of coherence, or pCell, as described in above paragraph [0076] of a first UE is the volume in space wherein the signal intended for the first UE has high enough signal-to-interference-plus-noise ratio (SINR)that the data stream for the first UE can be demodulated successfully, while meeting predefined error rate performance.Thus, everywhere within the volume of coherence, the level of interference generated by data streams sent from the plurality of APs to the other UEs is sufficiently low that the first UE can demodulate its own data stream successfully.

In another embodiment, the volume of coherence or pCell is characterized by one specific electromagnetic polarization, such as linear, circular or elliptical polarization. In one embodiment, the pCell of a first UE is characterized by linear polarization along a first direction and the pCell of a second UE overlaps the pCell of the first UE and is characterized by linear polarization along a second direction orthogonal to the first direction of the first UE, such that the signals received at the two UEs do not interfere with oneanother. By way of example, but not limitation, a first UE pCell has linear polarization along the x-axis, a second UE pCell has linear polarization along the y-axis and a third UE pCell has linear polarization along the z-axis (wherein x-, y- and z-axes are orthogonal) such that the three pCells overlap (i.e., are centered at the same point in space) but the signals of the three UEs do not interfere because their polarizations are orthogonal.

In another embodiment, every pCell is uniquely identified by one location in three dimensional space characterized by (x,y,z) coordinates and by one polarization direction defined as linear combination of the three fundamental polarizations along the x-, y- and z-axes. As such, the present MU-MAS system is characterized by six degrees of freedom (i.e., three degrees of freedom from the location in space and three from the direction of polarization), which can be exploited to create a plurality of non-interfering pCells to different UEs.

In one embodiment, the VRIs,as described in above paragraph [0077], are independent execution instances that run on one or multiple processors. In another embodiment, every execution instance runseither on one processor, or on multiple processors in the same computer system, or on multiple processors in different computer systems connected through a network. In another embodiment, different execution instances run either on the same processor, or different processors in the same computer system, or multiple processors in different computer systems. In another embodiment, the processor is a central processing unit (CPU), or a core processor in a multi-core CPU, or an execution context in a hyper-threaded core processor, or a graphics processing unit (GPU), or a digital signal processor (DSP), or a field-programmable gate array (FPGA), or an application-specific integrated circuit.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the figures can be implemented using code and data stored and executed on one or more electronic devices. Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

### THE FOLLOWING STATEMENTS DESCRIBE SOME EMBODIMENTS OF THE INVENTION

A. A multiuser-multiple antenna system ("MU-MAS") comprising of:
   a first plurality of waveforms;
   one or more processing units precoding the first plurality of waveforms into a second plurality of waveforms that are concurrently transmitted at the same carrier frequency;
   wherein the second plurality of waveforms combine in a plurality of volumes in space such that in each one of the plurality of volumes in space one of the first plurality of waveforms can be demodulated by one of a plurality of user devices.
B. The system in Statement A, further comprising of a plurality of protocol stacks generating the first plurality of waveforms.
C. The system in Statement B, wherein a different protocol stack is mapped to each volume in space.
D. The system in Statement B, wherein at least one protocol stack maps to more than one volume in space.
E. The system in Statement B, wherein a plurality of data streams from the plurality of protocol stacks is received concurrently by a plurality of user devices.
F. The system in Statement B, wherein at least two different protocol stacks concurrently implement different protocols.
G. The system in Statement B, wherein the protocol stacks include one or more of GSM, 3G, HSPA+, CDMA, WiMAX, LTE, LTE-Advanced, or Wi-Fi.
H. The system in Statement A wherein the frequency band is subdivided into a plurality of FDMA, OFDMA or SC-FDMA blocks, with a plurality of volumes in space in each of the FDMA, OFDMA or SC-FDMA blocks.
I. The system in Statement H, wherein a user device is located within each of a plurality of the volumes in space within each of the FDMA, OFDMA, or SC- FDMA blocks.
J. The system in Statement I, wherein the block sizes are allocated in accordance with data demand from user devices.
K. The system in Statement A, wherein a different plurality of volumes in space is created during different time intervals.
L. The system in Statement K, wherein a user device is located within each of a plurality of the volumes in space within each time interval.
M. The system in Statement L, wherein the durations of the time intervals are allocated in accordance with data demand from user devices.
N. The system in Statement A, wherein the MU-MAS comprises of a first radio access network (RAN).
O. The system in Statement B, wherein at least one protocol stack comprises all or a subset of the long term evolution (LTE) user-plane or control-plane protocol layers.
P. The system in Statement B, wherein at least one protocol stack outputs a waveform for a protocol that is at least partially analog.
Q. The system in Statement A, wherein at least one of the first plurality of waveforms is for wireless power.
R. The system in Statement A, wherein the MU-MAS comprises of a VCM handling protocol stack identity, authentication and mobility.
S. The system in Statement A, wherein the MU-MAS comprises of a VRM carrying out baseband processing of the data streams.
T. The system in Statement S, wherein the VRM comprises of a scheduler unit or a baseband unit or a MU-MAS baseband processor or a combination of both.
U. The system in Statement A, wherein the MU-MAS comprises of a plurality of RANs.
V. The system in Statement U, wherein the plurality of RANs communicate with each other to jointly create volumes in space.
W. The system in Statement V, wherein a first RAN hosts at least one protocol stack for a jointly-created volume in space.
X. The system in Statement V, wherein a first RAN transfers the state of at least one protocol stack to a second RAN to be hosted by the second RAN.
Y. The system in Statement X, wherein a user device within a volume in space receiving data communications through the transferred protocol stack experiences no discontinuity in its data stream during the transfer.
Z. The system in Statement A, wherein the MU-MAS comprises a baseband precoder unit that creates the volumes in space.

AA.The system in Statement Z, wherein the precoder dynamically adjusts size, shape and waveform signal strength of the volumes in space for adapting to changing propagation conditions.
BB.The system in Statement Z, wherein the MU-MAS baseband precoder unit operates precoding only during certain time intervals and/or within certain frequency ranges.
CC. The system in Statement BB, wherein the certain time intervals and/or certain frequency ranges correspond to particular control or data blocks in the protocol stacks.
DD. The system in Statement CC, wherein the MU-MAS is LTE-compliant network and the baseband precoder unit operates precoding over all the PDCCH or only the part of it containing the DCI 1A and 0.
EE.The system in Claim 1 wherein uplink transmissions are transmitted from user devices located in the volumes in space to be received by MU-MAS antennas.
FF. The system in Statement EE, wherein a plurality of uplink transmissions are concurrently transmitted in the same frequency band.
GG. The system in Statement FF, wherein post-coding in the MU-MAS system is employed to separate the multiple concurrent uplink transmissions.
HH. The system in Statement A, wherein the waveform in the volume ispolarized.
II. The system in Statement A, wherein at least one of the second plurality of waveforms is transmitted to at least one of a plurality of access points (APs).
JJ. The system in Statement II, wherein at least one of the second plurality of waveforms is transmitted to at least one of a plurality of APs as I/Q samples.
KK.The system in Statement II, wherein the second plurality of waveforms are transmitted to at least one of a plurality of APs at a lower data rate than I/Q samples.
LL. A multiuser-multiple antenna system ("MU-MAS") comprising of:
   a first plurality of waveforms;
   one or more processing units precoding the first plurality of waveforms into a second plurality of waveforms that are concurrently transmitted at the same carrier frequency;
   wherein the second plurality waveforms combine in a plurality of volumes in space; and
   each one of the plurality of volumes in space contains one of the first plurality of waveforms modulating the same carrier frequency.
MM. The system in Statement LL, further comprising of a plurality of protocol stacks generating the first plurality of waveforms.
NN. The system in Statement LL, wherein a user device demodulates the one of the first plurality of waveforms in each of the pluralities of volumes in space.
OO. The system in Statement NN, wherein different user devices use different wireless protocols in the same spectrum.
PP.The system in Statement OO, wherein at least two protocols are spectrum-incompatible.
QQ. The system in Statement LL, wherein one or more LTE standard protocols are implemented by the plurality of protocol stacks.
RR. The system in Statement LL, wherein one or more Wi-Fi standard protocols are implemented by the plurality of protocol stacks.
SS.The system in Statement LL, wherein at least two spectrum-incompatible protocol standards are implemented by the plurality of protocol stacks concurrently in the same spectrum.
TT.A multiuser-multiple antenna system ("MU-MAS") with concurrent transmissions of a first plurality of waveforms wherein:
   the first plurality of waveforms add up to create a second plurality of independent waveforms in the same frequency band for a plurality of user devices, in which at least one of the second plurality of independent waveforms carries wireless power to a user device.
UU. The system in Statement TT, wherein the wireless power is received by a rectifying antenna.
VV.The system in Statement TT, wherein the wireless power is received by a rectifying antenna providing feedback to the MU-MAS.
WW. The system as in Statement TT, wherein at least one of the second plurality of waveforms carries data.
XX.The system as in Statement TT, wherein at least one of the second plurality of waveforms carries both wireless power and data.

## Claims

1. A multiuser-multiple antenna system ("MU-MAS") comprising:
a plurality of user equipment (UE) devices;
a MU-MAS baseband processor;
one or a plurality of radio access networks (RANs) comprising a plurality of distributed access points (APs) coupled to the MU-MAS baseband processor and implementing a plurality of wireless protocol stacks associated with a corresponding plurality of wireless standards, including:
a Global System for Mobile Communications ("GSM") protocol stack;
a Third Generation (3G) wireless protocol stack;
an Evolved High Speed Packet Access ("HSPA+") protocol stack;
a Long Term Evolution ("LTE") protocol stack;
an LTE Advanced ("LTE-A") protocol stack; and
a Wi-Fi protocol stack;
wherein the LTE protocol stack includes an LTE control-plane or user-plane protocol stack;
wherein each UE device communicates using its own protocol stack comprising a physical (PHY) layer, a medium-access control (MAC) layer, a radio link control (RLC) layer and a packet data convergence protocol (PDCP) layer, each UE device to communicate with a gateway through an IP layer and with a network through an application layer, the MU-MAS baseband processor to precode baseband signals of the wireless protocol stacks to generate MU-MAS precoding information to establish links with the UE devices;
wherein a plurality of the distributed APs are coupled to the baseband processor to combine data streams from each of the plurality of protocol stacks with the MU-MAS precoding information to produce a corresponding plurality of precoded baseband waveforms, each distributed AP of the plurality of distributed APs comprising an analog-to-digital/digital-to-analog (ADC/DAC) unit, an RF chain, and an antenna to modulate the plurality of precoded baseband waveforms onto a same frequency as used simultaneously by other distributed APs to produce a plurality of precoded, modulated waveforms using the same frequency;
wherein the MU-MAS baseband processor is to precode the baseband signals of the wireless protocol stacks in accordance with a channel matrix to create a resulting waveform for each UE device which simultaneously utilizes the full bandwidth of the wireless spectrum.
